# EUROPÄISCHE PATENTSCHRIFT

(11) **EP 1 072 452 B1**
(45) Veröffentlichungstag und Bekanntmachung des Hinweises auf die Patenterteilung: **28.12.2005**
(21) Anmeldenummer: 00113107.7
(22) Anmeldetag: 28.06.2000
(51) Int. Cl.: B60H 1/00

(54) **Bedienelement**
Operating element
Elément de commande

(30) Priorität: 28.07.1999 DE 19935343
(43) Veröffentlichungstag der Anmeldung: 31.01.2001
(73) Patentinhaber: Volkswagen Aktiengesellschaft, 38436 Wolfsburg (DE)
(72) Erfinder: Schrader, Hartmut, 38368 Grasleben (DE); Weimann, Nils, 38102 Braunschweig (DE); Parrer, Henry, 38446 Wolfsburg (DE); Hasenauer, Silke, 38553 Wasbüttel (DE)
(74) Vertreter: Effert, Bressel und Kollegen

(56) Entgegenhaltungen:
- EP-A- 0 282 817
- EP-A- 0 771 681
- DE-A- 19 609 390
- DE-U- 29 505 606
- US-A- 4 394 546

## Beschreibung

Die Erfindung betrifft ein Bedienelement zur Steuerung verschiedener Bedienfunktionen.

Ein solches Bedienelement ist aus der DE 197 35 976 A1 bekannt, mit dem eine Heizungs-, Belüftungs- und/oder Klimaanlage sowie für eine Zusatzheizung eines Kraftfahrzeuges über das gemeinsame Bedienelement gesteuert werden. Das Bedienelement weist hierzu eine Plus-Taste und eine Minus-Taste auf, über die eine Temperatursollwertvorgabe eingebbar ist, die dann auf einem innerhalb des Bedienelementes angeordneten Anzeigeelement darstellbar ist. Über ein separates Schaltelement kann temporär das Bedienelement der Zusatzheizung zugeordnet und über das Bedienelement die Zusatzheizung programmiert werden.

Aus der US-5,332,877 ist ein piktogrammförmiges Schaltelement bekannt, das in zwei Bereiche unterteilt ist. Durch Betätigung eines Bereiches wird eine Anzeige- und Steuereinheit auf den jeweiligen Bereich umgeschaltet.

Aus der DE 196 21 025 C2 ist eine Bedienvorrichtung für eine Klimaanlage eines Kraftfahrzeuges mit wenigstens einem in einem Innenraumbereich des Kraftfahrzeuges angeordneten Bedienelement bekannt, das für eine manuelle Einstellung einer Betriebsfunktion in einer Bedienebene beweglich gelagert ist, sowie mit einer Schaltungsanordnug für eine Betätigung einer automatischen Betriebsfunktion der Klimaanlage, wobei das Bedienelement zusätzlich lotrecht zu der Bedienebene axial beweglich gelagert ist und die Schaltungsanordnung zur Betätigung der automatischen Betriebsfunktion der Klimaanlage mit der Axialbeweglichkeit des Bedienelementes in Wirkverbindung steht.

Nachteilig an den bekannten Bedienelementen ist, daß diese relativ viel Platz benötigen und teilweise unübersichtlich angeordnet sind.

Aus der US-4,394,546 ist ein Bedienelement zur Bewegung eines Cursors oder einer Einrichtung entlang dreier Freiheitsgrade bekannt, umfassend einen bidirektionalen drehbaren Ring und vier Tasten, die innerhalb des Ringes angeordnet sind. Mittels der vier Tasten kann dabei eine hoch-runter, lilnks-rechts-Bewegung und mittels des Drehgebers eine Rotation durchgeführt werden.

Aus der EP 0 282 817 A1 ist ein Drehknopf bekannt, umfassend einen bidirektional drehbaren Sollwertgeber und innerhalb des Drehgebers angeordneten Funktionsauswahl-Schaltern.

Aus der DE 295 05 606 U1 ist ein Bediengerät für eine Kraftfahrzeug-Klimaautomatik mit Einstellmitteln und/oder Anzeigemitteln zumindest für Luftverteilung, Luftmenge und Lufttemperatur bekannt, umfassend jeweils eine verstellbare analoge Sollwert-Einstellvorrichtung als Sollwert-Einstellmittel für Luftverteilung und/oder Luftmenge und/oder Lufttemperatur, wobei als Sollwert-Anzeigemittel für Luftverteilung und/oder Luftmenge jeweils jeder Sollwert-Einstellvorrichtung eine unabhängig durch Fremdantrieb unmittelbar nachgeführte analoge Sollwert-Anzeigevorrichtung zugeordnet ist. Die Sollwert-Einstellvorrichtungen für Luftmenge bzw. Luftverteilung sind jeweils als Drehknopf ausgebildet.

Aus der EP 0 771 681 A2 ist, konform mit der Präamble des Anspruchs 1, ein Bedienelement zur Steuerung der Klappenstellung von Luftdüsen und der Gebläsestärke in einem Kraftfahrzeug bekannt, wobei das Bedienelement einen drehbaren Sollwertgeber umfasst, in dem ein zweiter drehbarer Auswahl-Schalter angeordnet ist, über den eine jeweilige Bedienfunktion einstellbar ist.

Der Erfindung liegt daher das technische Problem zugrunde, ein Bedienelement zur Steuerung der Klappenstellung von Luftdüsen und der Gebläsestärke in einem Kraftfahrzeug zu schaffen, das kompakt aufgebaut ist und eine gute Zuordenbarkeit zu den verschiedenen Funktionen gewährleistet und benutzerfreundlich handhabbar ist.

Die Lösung des technischen Problems ergibt sich durch den Gegenstand mit den Merkmalen des Patentanspruches 1. Weitere vorteilhafte Ausgestaltungen der Erfindung ergeben sich aus den Unteransprüchen.

Hierzu sind die Auswahl-Schalter als Drucktasten oder als berührungssensitive Schalter ausgebildet, die in dem drehbaren Sollwertgeber angeordnet sind.

Durch die Ausbildung des Bedienelementes als drehbaren Sollwert- oder Befehlsgeber, in dem die Auswahl-Schalter für die verschiedenen Bedienfunktionen angeordnet sind, benötigt das Bedienelement nur den Bauraum eines gewöhnlichen Drehgebers. Des Weiteren sind die verschiedenen Auswahlschalter durch ihre unmittelbare Nähe zueinander sowie zu dem drehbaren Sollwert- oder Befehlsgeber leicht zuordenbar.

In einer weiteren bevorzugten Ausführungsform ist der drehbare Sollwert- Befehlsgeber als Ring ausgebildet, der vorzugsweise bidirektional drehbar ist. Innerhalb des Rings können dann die Auswahlschalter angeordnet werden.

Zur vereinfachten Einstellung der Sollwerte oder Befehlseingabe können dem drehbaren Sollwert- oder Befehlsgeber Raststellungen zugeordnet sein. Dabei kann vorgesehen sein, dass je nach ausgewählter Funktion keine oder unterschiedliche Raststufen dem drehbaren Sollwert- oder Befehlsgeber zugeordnet sind.

In einer weiteren bevorzugten Ausführungsform ist zwischen den Auswahl-Schaltern ein Anzeigeelement angeordnet, über das der jeweils aktuelle Sollwert oder Befehl für die ausgewählte Funktion dargestellt wird, wobei das Anzeigeelement beispielsweise als LCD-Element ausgebildet ist. Zur besseren Zuordenbarkeit der verschiedenen Auswahl-Schalter sind diese vorzugsweise mit Piktogrammen ihrer Funktion unterlegt.

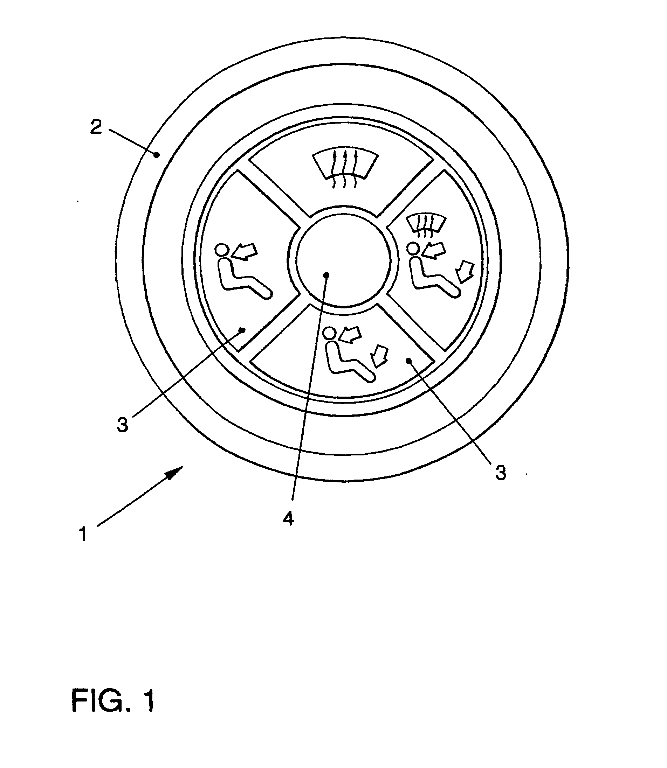

Die Erfindung wird nachfolgend anhand eines bevorzugten Ausführungsbeispiels näher erläutert. Die einzige Figur zeigt ein Bedienelement zur Steuerung der Klappen von Luftdüsen in einem Kraftfahrzeug.
Das Bedienelement 1 umfaßt einen als Ring 2 ausgebildeten Sollwertgeber und vier innerhalb des Rings 2 angeordnet Auswahl-Schalter 3. Der Ring ist bidirektional drehbar und mit Raststellungen ausgebildet. Über den Ring 2 wird die Gebläse-Stärke absolut eingestellt. Die Auswahl-Schalter 3 sind als Kreissegmente ausgebildet und mit Piktogrammen unterlegt, die jeweils die vorwiegende Ausrichtung eines Luftstrahls darstellen. Zwischen den Auswahl-Schaltern 3 ist ein Anzeigeelement 4 angeordnet, in dem alphanumerisch und/oder piktogrammförmig zusätzliche Informationen darstellbar sind. Die Auswahl-Schalter 3 weisen jeweils zwei Betriebsstellungen auf, nämlich eine für eine Automatik und eine für eine manuelle Sollwerteingabe. Sind die Auswahl-Schalter 3 beispielsweise als berührungssensitive Schalter ausgebildet, so wird durch eine Berührung die Gebläse-Stellung ausgewählt, deren Sollwert manuell über den Ring 2 veränderbar ist. Wird der betreffende Auswahlschalter 3 erneut berührt, so wird automatisch ein vom Fahrer oder Hersteller vordefinierter Sollwert eingestellt. Über ein erneutes Betätigen desselben Auswahl-Schalters 3 kann dann wieder in den manuellen Modus gewechselt werden. Der jeweilige Modus und/oder der einzustellende Sollwert kann dabei über das Anzeigeelement 4 dargestellt werden.

## Patentansprüche

1. Bedienelement zur Steuerung der Klappenstellung von Luftdüsen und der Gebläsestärke in einem Kraftfahrzeug, wobei das Bedienelement (1) einen drehbaren Sollwertgeber oder Befehlsgeber umfasst, in dem Auswahl-Schalter (3) für die verschiedenen Bedienfunktionen angeordnet sind,
**dadurch gekennzeichnet, dass**
die Auswahl-Schalter (3) als Drucktasten oder als berührungssensitive Schalter ausgebildet sind, wobei mindestens ein Auswahl-Schalter (3) mit einer manuellen und einer automatischen Betriebsstellung ausgebildet ist.

2. Bedienelement nach Anspruch 1, **dadurch gekennzeichnet, dass** der drehbare Sollwertgeber oder Befehlsgeber als Ring (2) ausgebildet ist.

3. Bedienelement nach Anspruch 1 oder 2, **dadurch gekennzeichnet, dass** der drehbare Sollwertgeber oder Befehlsgeber bidirektional drehbar ausgebildet ist.

4. Bedienelement nach einem der vorangegangenen Ansprüche, **dadurch gekennzeichnet, dass** dem Sollwert- oder Befehlsgeber Raststellungen zugeordnet sind.

5. Bedienelement nach einem der vorangegangenen Ansprüche, **dadurch gekennzeichnet, dass** zwischen den Auswahl-Schaltern (3) ein Anzeigeelement (4) angeordnet ist.

6. Bedienelement nach einem der vorangegangenen Ansprüche, **dadurch gekennzeichnet, dass** die Auswahl-Schalter (3) piktogrammförmig unterlegt sind.

## Claims

1. Operator control element for controlling the flap position of air nozzles and the strength of the fan in a motor vehicle, the operator control element (1) comprising a rotatable setpoint transmitter or command transmitter in which selector switches (3) for the various operator control functions are arranged,
**characterized in that**
the selector switches (3) are in the form of pushbuttons or touch-sensitive switches, with at least one selector switch (3) being formed with a manual and an automatic operating position.

2. Operator control element according to Claim 1, **characterized in that** the rotatable setpoint transmitter or command transmitter is in the form of a ring (2).

3. Operator control element according to Claim 1 or 2, **characterized in that** the rotatable setpoint transmitter or command transmitter can be rotated in a bidirectional manner.

4. Operator control element according to one of the preceding claims, **characterized in that** the setpoint or command transmitter has associated latching positions.

5. Operator control element according to one of the preceding claims, **characterized in that** a display element (4) is arranged between the selector switches (3).

6. Operator control element according to one of the preceding claims, **characterized in that** pictograms are placed beneath the selector switches (3).

## Revendications

1. Elément de commande pour la commande de la position du clapet de buses à air et de l'intensité du soufflage dans un véhicule automobile, dans lequel l'élément de commande (1) comprend un générateur de valeur de consigne rotatif ou un générateur d'ordre, dans lequel sont disposés des commutateurs de sélection (3) pour les différentes fonctions de commande,
**caractérisé en ce que**
les commutateurs de sélection (3) sont réalisés sous forme de boutons poussoirs ou de commutateurs sensibles au toucher, au moins un commutateur de sélection (3) étant réalisé avec une position de fonctionnement manuel et une position de fonctionnement automatique.

2. Elément de commande selon la revendication 1, **caractérisé en ce que** le générateur de valeur de consigne rotatif ou le générateur d'ordre est réalisé sous forme d'anneau (2).

3. Elément de commande selon la revendication 1 ou 2, **caractérisé en ce que** le générateur de valeur de consigne rotatif ou le générateur d'ordre est réalisé de manière à pouvoir tourner dans les deux sens.

4. Elément de commande selon l'une quelconque des revendications précédentes, **caractérisé en ce que** l'on associe des positions d'encliquetage au générateur de valeur de consigne ou au générateur d'ordre.

5. Elément de commande selon l'une quelconque des revendications précédentes, **caractérisé en ce que** l'on dispose un élément d'affichage (4) entre les commutateurs de sélection (3).

6. Elément de commande selon l'une quelconque des revendications précédentes, **caractérisé en ce que** les commutateurs de sélection (3) sont posés en tant que base en forme de pictogramme.
